# FASCICULE DE BREVET EUROPEEN

(11) **EP 3 314 818 B1**
(45) Date de publication et mention de la délivrance du brevet: **24.02.2021**
(21) Numéro de dépôt: 16744438.9
(22) Date de dépôt: 24.06.2016
(51) Int. Cl.: H04L 12/24, H04L 29/08

(54) **PROCÉDÉ DE NOTIFICATION RELATIF À AU MOINS UNE OPÉRATION MISE EN OEUVRE PAR UN DISPOSITIF FORMANT NOEUD D'UN RÉSEAU**
VERFAHREN ZUR BENACHRICHTIGUNG IN BEZUG AUF MINDESTENS EINE OPERATION, DIE VON EINER VORRICHTUNG AUSGEFÜHRT WIRD, DIE EINEN KNOTEN EINES NETZWERKS BILDET
NOTIFICATION METHOD RELATIVE TO AT LEAST ONE OPERATION IMPLEMENTED BY A DEVICE FORMING A NODE OF A NETWORK

(30) Priorité: 25.06.2015 FR 1555877; 30.11.2015 FR 1561595
(43) Date de publication de la demande: 02.05.2018
(73) Titulaire: ORANGE, 75015 Paris (FR)
(72) Inventeur: LAMPIN, Quentin, 38600 Fontaine (FR); BARTHEL, Dominique, 38190 Bernin (FR)
(74) Mandataire: Cabinet Beau de Loménie
(86) Numéro de dépôt international: PCT/FR2016/051567
(87) Numéro de publication internationale: WO 2016/207576

(56) Documents cités:
- WO-A1-2012/111745
- US-A1- 2004 223 485
- US-A1- 2011 090 334
- US-A1- 2014 259 168
- US-B1- 6 243 746

## Description

### Arrière-plan

L'invention se situe dans le domaine des télécommunications.

L'invention concerne plus particulièrement le domaine de l'observation des réseaux de télécommunication en cours de fonctionnement pour en vérifier le comportement ou en mesurer les performances.

Elle s'applique particulièrement aux réseaux formés d'objets communicants contraints en ressources.

Des systèmes connus permettent d'observer l'état de chaque nœud d'un réseau. Dans ces systèmes, un serveur central, appelé NOC (« Network Operation Center »), s'informe sur des paramètres de fonctionnement et les mesures de performances en interrogeant explicitement les nœuds du réseau, c'est-à-dire les objets communicants, à travers le réseau en fonctionnement. Cette interrogation est en particulier effectuée au moyen de protocoles spécifiques tels que le protocole SNMP (pour « Simple Network Management Protocol »).

D'une part, cette technique nécessite l'utilisation de bande passante au niveau du réseau. La bande passante utilisée croit avec l'intensité de l'observation.

D'autre part, les interrogations étant asynchrones par rapports aux changements d'état internes des nœuds observés, le processus d'interrogation doit être intense pour espérer observer tous les états successifs, sans cependant qu'une garantie ne soit acquise.

Ceci a pour effets négatifs de consommer d'importantes ressources au niveau des nœuds observés dès qu'une observation fine est requise.

Ces systèmes sont bien adaptés aux réseaux de nœuds dans lesquels les nœuds disposent de fortes capacités en termes de bande passante et d'énergie.

En revanche, ils ne sont pas adaptés aux réseaux de nœuds dans lesquels les nœuds sont contraints en énergie et/ou en bande passante.

US2011/090334, décrit une procède fournissant une notification d'alarme pour le système de sécurité, impliquant l'établissement d'une session avec une adresse de notification d'alarme et l'envoi de données vidéo sur un réseau de données par paquets à l'adresse de notification d'alarme. WO 2012/111745, décrit un système de réseau local (LAN) générant des données de topologie représentant la relation de connexion du routeur et du concentrateur sur la base de la liste d'identificateurs de points de connexion lue à partir de la section de charge utile de la trame de notification du concentrateur. US 6,243,746, décrit une représentation des périphériques réseau pour la gestion du réseau informatique impliquant la mise à jour de la relation parent-enfant dans l'objet de topologie, associée à un périphérique spécifique lors de la réception d'une notification concernant ce périphérique.

Un des buts de l'invention est de remédier à des insuffisances/inconvénients de l'état de la technique et/ou d'y apporter des améliorations.

### Objet et résumé de l'invention

A cette fin, l'invention se rapporte à un procédé de notification mis en œuvre par au moins un premier dispositif d'une pluralité de dispositifs formant nœuds d'un réseau, ledit premier dispositif étant apte à émettre à destination d'au moins un deuxième dispositif de la pluralité et/ou à recevoir d'au moins un deuxième dispositif de la pluralité, au moins un message de données via une première liaison de communication.

Selon l'invention, le procédé de notification comporte une étape de transmission, par ledit premier dispositif, d'au moins un message de notification signalant au moins une opération prédéterminée relative à au moins une instance de ce message de données et mise en œuvre par une entité fonctionnelle dudit premier dispositif, ledit message de notification comportant un identifiant dudit premier dispositif, un identifiant de ladite entité fonctionnelle, un identifiant de ladite opération et un identifiant commun à toutes les instances dudit message de données au sein dudit premier dispositif.

Des messages de notification sont émis par des dispositifs formant nœud d'un réseau. Chaque message de notification signale la réalisation d'au moins une opération par un dispositif formant nœud d'un réseau d'une pluralité de dispositifs formant nœuds de ce réseau.

Plus précisément, chaque message de notification comprend un identifiant dudit premier dispositif, un identifiant de ladite entité fonctionnelle, un identifiant de ladite opération et un identifiant commun à toutes les instances dudit message de données au sein dudit premier dispositif.

Les différents messages de notification émis peuvent ensuite être analysés au niveau d'un dispositif ayant reçu les messages ou au niveau d'un dispositif apte à accéder aux messages de notification reçus.

Lors de cette analyse, l'identifiant de module fonctionnel (ie d'entité fonctionnelle) permet d'obtenir des détails sur le traitement d'un message de données reçu ou à émettre, réalisé par un dispositif formant nœud. Il est ainsi possible de détecter des problèmes de comportements d'un module fonctionnel particulier.

Il est possible par exemple d'identifier un dispositif défaillant par exemple en constatant qu'il ne réémet pas les messages de données qu'il reçoit.

Cette détection permet un dépannage plus rapide du dispositif mis en cause.

Selon une caractéristique du procédé de notification, le message de notification comprend un identifiant de ladite opération. Cet 'identifiant d'opération permet de connaitre précisément les traitements effectués par un dispositif.

Les messages de données sont échangés via une première liaison de communication. L'émission des messages de notification via une deuxième liaison de communication différente de la première liaison permet de ne pas perturber l'échange de message de données via la première liaison de communication.

▪ Selon un mode particulier de réalisation de l'invention, le premier dispositif émet un message de notification à chaque occurrence de l'une des opérations suivantes :
- génération d'un message de données, par exemple par une entité applicative dudit dispositif ;
- prise en charge par une entité fonctionnelle dudit dispositif d'un message reçu en provenance d'une entité autre fonctionnelle dudit dispositif ;
- d'un message de données en provenance d'un autre dispositif ;
- envoi d'un message de données à un autre dispositif ;
- consommation d'un message de données par une entité fonctionnelle dudit dispositif.

Selon une caractéristique particulière du procédé de notification, ledit identifiant de message est généré par ledit premier dispositif lors de la réception par ledit premier dispositif d'un message de données via la première liaison de communication ou lors de la génération d'un message de données par le premier dispositif.

La réception d'un message de données, respectivement la création d'un message de données, est la première opération réalisée par un dispositif via à vis d'un message de données. L'identifiant commun à toutes les instances du message au sein du dispositif est ensuite transmis avec le message de données lors du transfert d'un module fonctionnel du dispositif à un autre module fonctionnel de ce dispositif. Le message de données peut être modifié par un module fonctionnel alors que l'identifiant de message associé ne varie pas.

L'identifiant de message est unique au niveau d'un dispositif. Ceci permet d'identifier de façon certaine les traitements appliqués à un message de données reçu ou généré par le dispositif.

Selon une autre caractéristique particulière du procédé de notification, ledit message de notification comporte ledit message de données.

L'introduction d'un message de données dans les messages de notification permet de déterminer le trajet des messages de données entre dispositifs par comparaison des contenus binaires de ces messages. Il permet notamment de savoir quel est ou quels sont les dispositifs ayant reçus un message de données émis par un dispositif. En effet, un message de données émis est reçu sans modification des données (contenu) qu'il contient.

Selon une autre caractéristique particulière du procédé de notification, utilisée seule ou en combinaison avec les caractéristiques précédentes, ledit message de notification comprend une date.

La datation des messages au niveau du dispositif permet d'établir de façon certaine la chronologie des messages de notification et, en conséquence, la chronologie des opérations effectuées.

Selon une autre caractéristique particulière du procédé de notification, utilisée seule ou en combinaison avec les caractéristiques précédentes, ledit au moins un message de notification est transmis via une deuxième liaison de communication.

Ainsi, les dispositifs formant nœuds du réseau communiquent avec les autres dispositifs du réseau via une première liaison et signalent la mise en œuvre des opérations qu'ils réalisent via une autre liaison. L'utilisation d'une liaison de communication différente de la première liaison pour signaler la mise en œuvre d'une opération permet de ne pas perturber l'échange de messages de données entre les différents dispositifs formant nœuds du réseau. Ceci permet ainsi d'observer le réseau dans des conditions réelles de fonctionnement.

Selon un mode de réalisation particulier, un message de notification signalant une opération est transmis par un dispositif formant nœud du réseau au moment où cette opération est effectuée.

Les messages sont émis spontanément par les dispositifs formant nœuds qui signalent ainsi l'exécution des opérations qu'ils réalisent.

L'invention se rapporte également à un procédé de modélisation du réseau à partir de messages de notification émis par au moins un premier dispositif d'une pluralité de dispositifs formant nœuds d'un réseau, ledit premier dispositif étant apte à émettre à destination d'au moins un deuxième dispositif de la pluralité et/ou à recevoir d'au moins un deuxième dispositif de la pluralité, au moins un message de données via une première liaison de communication.

Le procédé de modélisation du réseau comporte les étapes suivantes mises en œuvre par un dispositif de modélisation du réseau :
- obtention d'une pluralité de messages de notification émis par au moins un dispositif de la pluralité de dispositifs, un message de notification signalant au moins une opération prédéterminée relative à au moins une instance d'un message de données et mise en œuvre par une entité fonctionnelle dudit au moins un dispositif, ledit message de notification comportant un identifiant dudit dispositif, un identifiant de ladite entité fonctionnelle, un identifiant de ladite opération et un identifiant commun à toutes les instances dudit message de données au sein dudit dispositif;
- détermination d'au moins une partie d'un trajet effectué par au moins un dit message de données au sein dudit réseau par analyse de messages de notification reçus ; et
- pour au moins une entité fonctionnelle, détermination d'une topologie du réseau au niveau d'abstraction d'au moins une dite entité fonctionnelle, par analyse de messages de notification reçus.

L'invention propose un mécanisme dans lequel l'administrateur n'interroge pas directement les nœuds du réseau mais interroge de manière asynchrone un modèle du réseau renseigné par les nœuds directement ou indirectement (éventuellement via des relais ou des dispositifs d'observation) et de façon incrémentale, chaque nœud apportant au modèle des informations complémentaires sur son état au fur et à mesure que ses différentes entités réalisent les opérations prédéterminées.

L'invention permet notamment à l'administrateur de reconstituer la trajectoire d'un paquet dans le réseau, la trajectoire d'un paquet pouvant être définie par l'ensemble des entités des différents nœuds traversés par les instances de ce message entre sa création dans un premier nœud et sa consommation dans un dernier nœud.

L'invention permet également de déterminer l'évolution des différentes topologies aux différents niveaux d'abstraction d'observation du réseau. Elle permet par conséquent d'évaluer le fonctionnement des protocoles, de diagnostiquer finement les problèmes de perte de connectivité, en déterminant l'origine de ces problèmes (rupture de connectivité radio, boucle de routage, nœud défaillant, ...).

Selon un mode de réalisation particulier du procédé de modélisation du réseau, au moins certains desdits messages de notification reçus comprennent un dit message de données et ledit trajet comporte au moins une première partie de trajet au sein d'un dispositif de la pluralité de dispositifs et une deuxième partie de trajet entre un premier dispositif de ladite pluralité et un deuxième dispositif de ladite pluralité, ladite première partie de trajet étant déterminée en fonction desdits identifiants communs aux instances d'un même message de données au sein d'un dispositif et la dite deuxième partie étant déterminée par comparaison de messages de données contenus dans lesdits messages de notification.

Selon un mode particulier de réalisation du procédé de modélisation, au moins certains desdits messages de notification reçus comprennent un dit message de données et dans lequel ladite topologie, à un niveau d'abstraction donné est obtenue à partir des identifiants d'entités fonctionnelles compris dans lesdits messages de notification.

L'invention se rapporte également à un dispositif formant nœud d'un réseau d'une pluralité de dispositifs formant nœuds dudit réseau, ledit dispositif étant apte à émettre à destination d'au moins un deuxième dispositif de la pluralité et/ou à recevoir d'au moins un deuxième dispositif de la pluralité, au moins un message de données via une première liaison de communication.

Ce dispositif comporte un module de communication, adapté pour transmettre un message de notification signalant au moins une opération prédéterminée relative à au moins une instance du message de données et mise en œuvre par une entité fonctionnelle dudit dispositif, ledit message de notification comportant un identifiant dudit dispositif, un identifiant de ladite entité fonctionnelle, un identifiant de ladite opération et un identifiant commun à toutes les instances dudit message au sein dudit dispositif.

L'invention se rapporte également à un dispositif de modélisation d'un réseau comportant:
- un module d'obtention d'une pluralité de messages de notification en provenance d'au moins un dispositif formant nœud d'un réseau d'une pluralité de dispositifs formant nœuds dudit réseau, ledit dispositif étant apte à émettre à destination d'au moins un deuxième dispositif de la pluralité et/ou à recevoir d'au moins un deuxième dispositif de la pluralité, au moins un message de données via une première liaison de communication,
   un dit message de notification signalant au moins une opération prédéterminée relative à au moins une instance d'un message de données et mise en œuvre par une entité fonctionnelle dudit dispositif, ledit message de notification comportant un identifiant dudit dispositif, un identifiant de ladite entité fonctionnelle, un identifiant de ladite opération et un identifiant commun à toutes les instances dudit message au sein dudit dispositif; et
- un module de traitement adapté pour analyser au moins certains des messages de notification reçus en vue de reconstituer au moins une partie d'un trajet effectué par au moins un dit message de données au sein dudit réseau et pour déterminer une topologie du réseau au niveau d'abstraction d'une dite entité fonctionnelle.

Selon une implémentation préférée, les différentes étapes du procédé de notification, respectivement du procédé de modélisation de réseau, selon l'invention sont mises en œuvre par un logiciel ou programme d'ordinateur.

L'invention concerne ainsi un logiciel ou programme, susceptible d'être exécuté par un ordinateur ou par un processeur de données, ce logiciel / programme comportant des instructions pour commander l'exécution des étapes d'un procédé de notification ou d'un procédé de modélisation du réseau. Ces instructions sont destinées à être stockées dans une mémoire d'un dispositif informatique, chargées puis exécutées par un processeur de ce dispositif informatique.

Ce logiciel / programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le dispositif informatique peut être mis en œuvre par une ou plusieurs machines physiquement distinctes et présente globalement l'architecture d'un ordinateur, incluant des constituants d'une telle architecture: mémoire(s) de données, processeur(s), bus de communication, interface(s) matérielle(s) pour la connexion de ce dispositif informatique à un réseau ou un autre équipement, interface(s) utilisateur, etc.
L'invention concerne aussi un support d'informations lisible par un processeur de données, et comportant des instructions d'un programme tel que mentionné ci-dessus. Le support d'informations peut être n'importe quel entité ou dispositif capable de stocker le programme.

### Brève description des dessins

D'autres particularités et avantages de la présente invention apparaitront dans la description suivante d'un mode de réalisation donné à titre d'exemple non limitatif, en référence aux dessins annexés, dans lesquels :
- la figure 1 est un schéma général illustrant un système selon un mode de réalisation de l'invention,
- la figure 2 est un schéma bloc représentant trois dispositifs formant nœud d'un réseau et un dispositif de modélisation du réseau selon un mode de réalisation de l'invention,
- la figure 3 représente les différentes entités d'une pile protocolaire d'un nœud du réseau ;
- la figure 4 représente des topologies du réseau à quatre niveaux d'abstraction ;
- les figures 5a, et 5b sont des organigrammes illustrant différentes étapes d'un procédé de notification et d'un procédé de modélisation du réseau selon un premier mode de réalisation de l'invention,
- la figure 6 est un organigramme illustrant différentes étapes d'un procédé de modélisation du réseau selon un mode de réalisation de l'invention,
- la figure 7 est un schéma illustrant des trajets effectués par des messages de données selon un mode de réalisation et des topologies du réseau reconstituées par analyse de messages de notification déclarés au cours d'opérations portant sur des instances de ce message.
- les annexes 1 et 2 fournissent des exemples d'heuristiques pouvant être utilisées dans un mode particulier de réalisation de l'invention.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

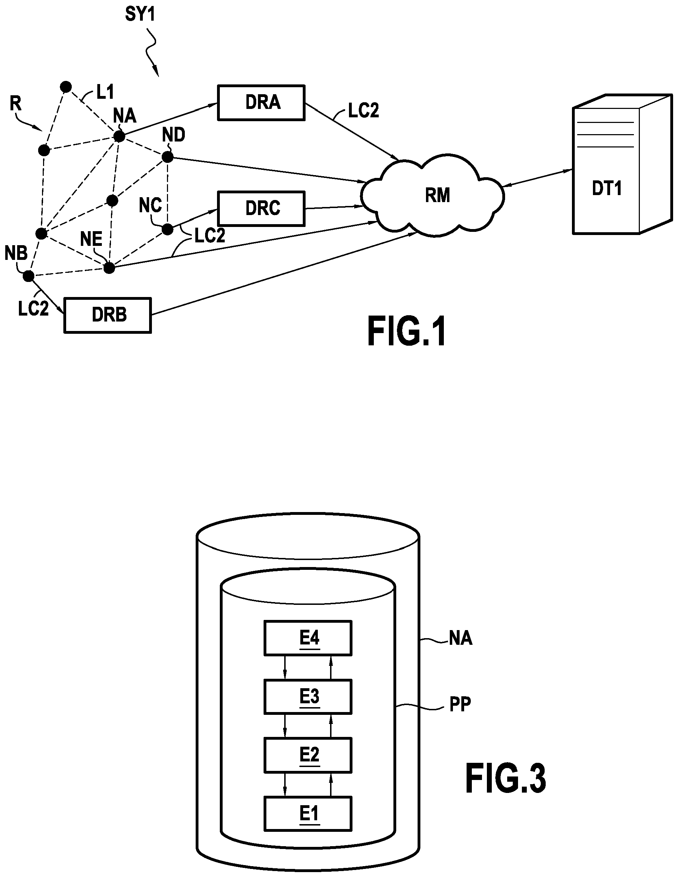

La figure 1 représente un système SY1 comprenant une pluralité de dispositifs NA, NB, NC, ND, NE... formant nœuds d'un réseau R et répartis dans une zone géographique et un dispositif DT1 de modélisation du réseau de ce réseau.

Un dispositif de la pluralité est par exemple un capteur, par exemple un capteur de mesures, tel qu'un compteur d'eau ou d'électricité.

Plus généralement, un tel dispositif est un objet communicant, c'est-à-dire un dispositif apte à transmettre des données à destination d'un ou plusieurs autres dispositifs de la pluralité et/ou à recevoir des données en provenance d'un autre dispositif de la pluralité.

Chaque dispositif de la pluralité est ainsi apte à communiquer avec un ou plusieurs autres dispositifs de la pluralité via une liaison de communication L1, dont seulement certaines sont représentées en traits pointillés.

La liaison de communication L1 représente une première liaison de communication au sens de l'invention.

La liaison de communication L1 est par exemple une liaison sans fil, par exemple une liaison radio. La liaison de communication est par exemple de type Wifi ou de type Bluetooth. A titre d'alternative, la liaison de communication L1 est une liaison filaire.

Chaque dispositif de la pluralité est apte à communiquer avec un autre dispositif de la pluralité soit directement soit par l'intermédiaire d'un ou plusieurs autres dispositifs de la pluralité.

Chaque dispositif de la pluralité est également apte à transmettre, directement ou non, via une liaison de communication LC2, des informations à un dispositif DT1 de modélisation du réseau connecté à un réseau de communication RM. Cette liaison de communication LC2 constitue une deuxième liaison de communication au sens de l'invention.

Dans le mode de réalisation décrit, les dispositifs ND et NE communiquent directement avec le dispositif DT1 de modélisation du réseau, mais les données transmises par les dispositifs NA, NB, NC transitent par un dispositif relais. Une deuxième liaison de communication est dans ce cas, une liaison reliant le dispositif NA, NB, NC et le dispositif DT1 de modélisation du réseau, via un dispositif relais.

Dans le mode de réalisation décrit, la deuxième liaison LC2 est différente de la première liaison L1.

Par exemple, la première liaison de communication L1 est une liaison radio d'une première fréquence prédéterminée et la liaison de communication LC2 une liaison radio d'une deuxième fréquence prédéterminée.

A titre d'alternative, la première liaison de communication L1 est une liaison sans fil de type Wifi, Bluetooth... ou encore une liaison filaire.

Egalement, à titre d'alternative, la liaison de communication LC2 est une liaison sans fil en champ proche, une liaison sans fil de type Wifi ou Bluetooth, une liaison filaire...

Egalement, à titre d'alternative, les dispositifs formant nœud et les dispositifs relais communiquent via la première liaison de communication L1.

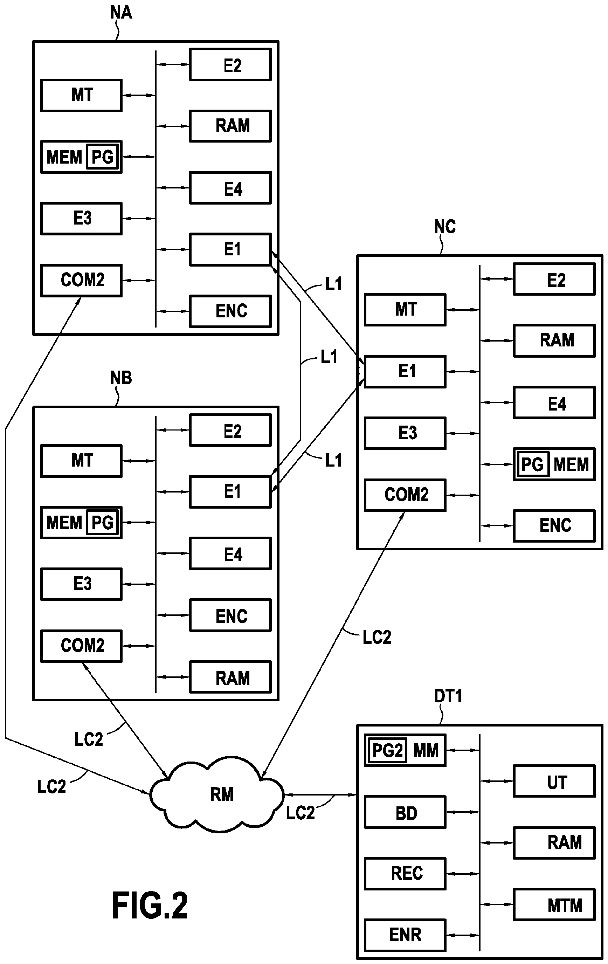

La figure 2 est un schéma bloc représentant trois dispositifs NA, NB et NC de la pluralité de dispositifs et le dispositif DT1 de modélisation du réseau selon un mode de réalisation. Les dispositifs ND et NE sont identiques aux dispositifs NA à NC.

Chaque dispositif NA, NB, NC, ND, NE comprend dans le mode de réalisation décrit, une entité (ou module) fonctionnelle applicative E4, une entité fonctionnelle de routage E3, une entité fonctionnelle de liaison E2, une entité de communication radio E1 et un autre module de communication COM2.

L'entité de communication radio E1 est apte à recevoir et à émettre des signaux sur la liaison de communication L1. Elle est ainsi apte à recevoir des signaux d'un autre dispositif du réseau R et à émettre des signaux à destination d'un autre dispositif du réseau R.

L'entité applicative E4 est notamment apte à générer des messages de données applicatives comportant un contenu BC.

L'entité de routage E3 est apte à éditer les messages applicatifs provenant de l'entité applicative E4 pour y ajouter des données de routage et à désencapsuler des messages provenant de l'entité de liaison E2 pour les transmettre aux couches applicatives.

L'entité de liaison E2 est apte à éditer les messages provenant de l'entité de routage E3 et y ajouter des informations de niveau liaison, par exemple l'adresse MAC du dispositif. Elle est également apte à désencapsuler les messages qu'elle reçoit de l'entité de communication radio E1 pour les transmettre à l'entité de routage E3.

Chaque dispositif NA, NB, NC, ND, NE comprend ainsi plusieurs modules ou entités fonctionnelles, ici quatre entités fonctionnelles E1, E2, E3, E4 adaptées pour traiter des messages de données reçus ou à émettre via la liaison de communication L1.

Aucune limitation n'est attachée au nombre et à la nature des entités fonctionnelles.

Dans la présente description, les termes modules et entités sont équivalents.

Chaque dispositif NA, NB, NC, ND, NE comporte également un deuxième module de communication COM2 pour communiquer via la liaison de communication LC2, directement ou non, éventuellement via un dispositif relai, avec le dispositif DT1 de modélisation du réseau.

Chaque dispositif de la pluralité comporte également de façon connue, notamment une unité de traitement MT équipée d'un microprocesseur, une ou plusieurs mémoires de stockage MEM, par exemple de type EEPROM, et une mémoire vive de type RAM.

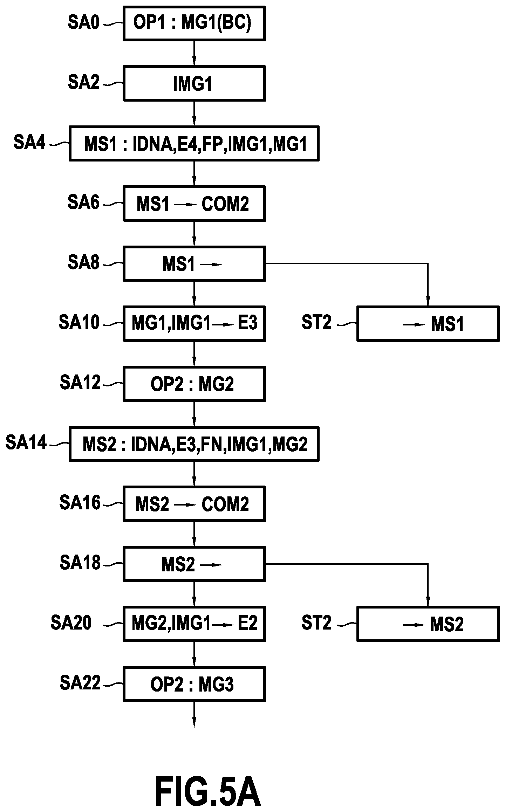

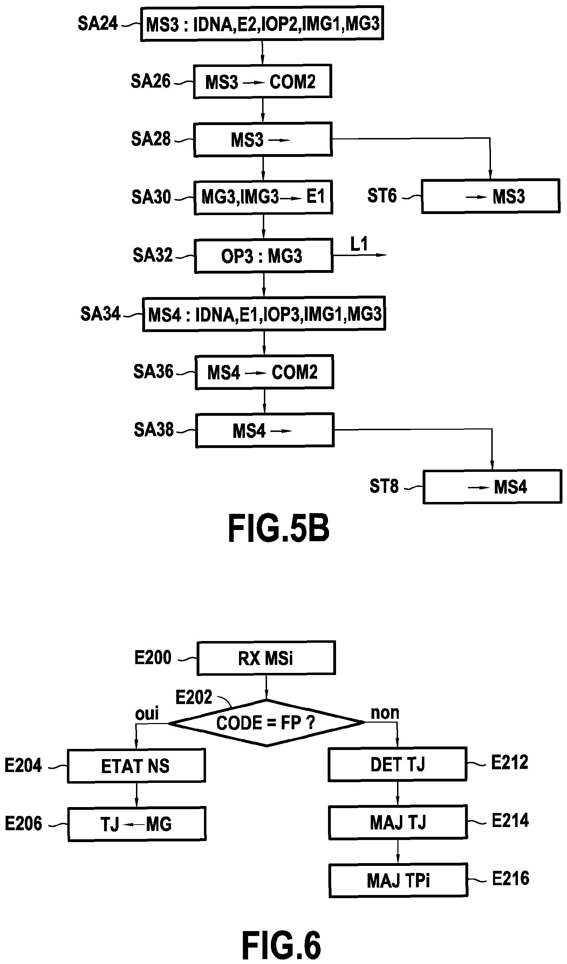

La mémoire de stockage MEM comporte des registres mémorisant un programme d'ordinateur PG comportant des instructions de programme adaptées à mettre en œuvre un procédé de notification selon un mode de réalisation de l'invention décrit ultérieurement en référence aux figures 5a et 5b.

Le dispositif DT1 de modélisation du réseau comporte une unité de traitement UT équipée d'un microprocesseur, une ou plusieurs mémoires de stockage MM, par exemple de type EEPROM, et une mémoire vive de type RAM.
Le dispositif DT1 de modélisation du réseau comporte notamment une mémoire de stockage BD.

Le dispositif DT1 de modélisation du réseau comporte également un module de réception REC, un module d'enregistrement ENR et un module de traitement de messages MTM.

Le dispositif DT1 de modélisation du réseau peut comporter de manière classique et non exhaustive les éléments suivants: un clavier, un écran de visualisation, un module d'affichage pour l'affichage sur l'écran de visualisation...

La mémoire de stockage MM comporte des registres mémorisant un programme d'ordinateur PG2 comportant des instructions de programme adaptées à mettre en œuvre un procédé de modélisation du réseau selon un mode de réalisation de l'invention décrit ultérieurement en référence à la figure 6.

En référence à la figure 3, on modélise la pile protocolaire PP d'un nœud (par exemple) NA du réseau par un ensemble fini d'entités Ei (quatre entités sur la figure 3), chacune de ces entités étant capable de communiquer avec les entités éventuellement placées en dessous et au-dessus de cette entité.

Au sens de l'invention, une entité peut notamment désigner :
- une entité logicielle, par exemple une couche protocolaire, par exemple une couche protocolaire au sens du modèle OSI (couche physique, couche MAC de liaison de données, couche réseau, couche transport, ..., couche applicative, ...) ; ou
- une entité matérielle (module radio, module d'alimentation, ...).

Chacune de ces entités présente un certain nombre de propriétés qui permettent de décrire un état de cette entité.

Les nœuds du réseau ne mettent pas nécessairement en œuvre toutes les mêmes entités.

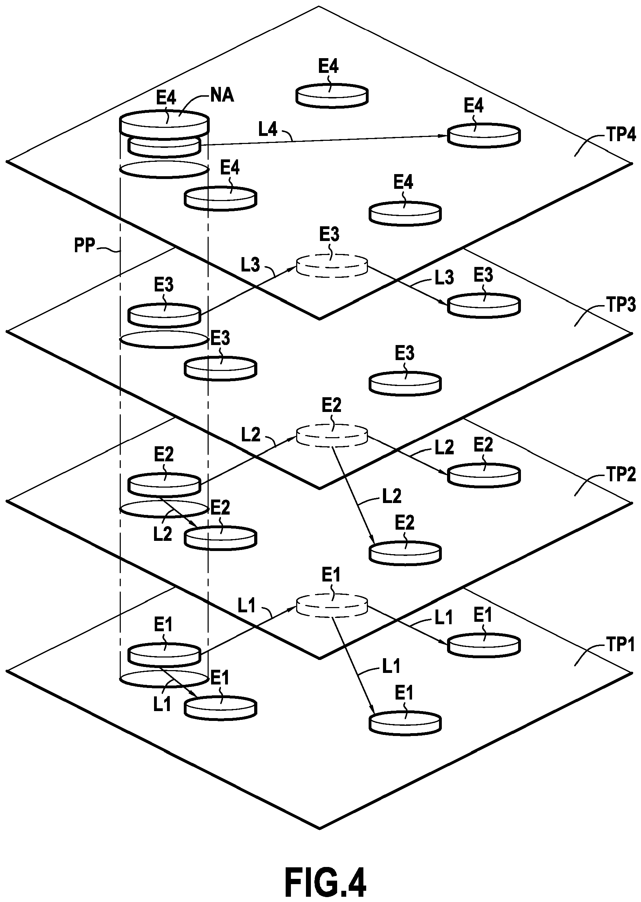

En référence à la figure 4, la connaissance des propriétés d'une entité Ek permet de déterminer une topologie TPk d'un niveau d'abstraction associé à cette entité, cette topologie TPk correspondant, au sens de l'invention, à l'ensemble des nœuds instanciant cette entité Ek et des liens utilisés par cette entité. Par exemple :
- une topologie TP1, dite topologie physique, peut être définie par les liens (filaires, radio) L1 interconnectant les équipements du réseau (ordinateurs, concentrateurs, routeurs, ...) ;
- une topologie TP2 de liaison de données, peut être construite en élaguant l'ensemble des liens de la topologie TP1 pour ne retenir et ne mémoriser qu'un sous-ensemble de liens L2 ; dans l'exemple de la figure 4, l'ensemble des liens L1 de la topologie physique ont été conservés ;
- une topologie TP3 , dite topologie de routage, peut être constituée en élaguant la topologie TP2 de liaison de données, pour regrouper un ensemble sélectionnés de liens L3 pour transmettre une information de proche en proche entre un nœud de création et un nœud de consommation d'un message. Dans l'exemple de la figure 4, seuls deux liens L3 des liens sous-jacents ont été retenus. On peut notamment supprimer dans cette topologie de routage les liens entre un concentrateur et les ordinateurs reliés à ce concentrateur qui ne participent pas au routage d'un message entre son point de création et son point de consommation ;
- une topologie TP4, dite topologie applicative, peut être obtenue en supprimant des éléments de la topologie de routage TP3 , autrement dit en faisant abstraction de toutes les couches de niveau inférieur à la couche applicative pour ne considérer qu'un lien L4 virtuel connectant directement un point de création à un point de consommation d'une information incapables en réalité de communiquer directement par voie radio.

Un mode de réalisation d'un procédé de notification mis en œuvre au sein du système SY1, va maintenant être décrit en référence aux figures 5A et 5B.

Au cours d'une étape SA0, l'entité applicative E4 du nœud NA génère un message de données MG1. Ce message de données comporte un contenu CB correspondant par exemple à des mesures réalisées par une sonde non représentée du dispositif NA.

La génération du message de données MG1 représente une opération FP de type « Production_de_Message » (en anglais FrameProduce) relative au message de données MG1.

Au cours d'une étape SA2, l'entité applicative E4 du dispositif NA génère un identifiant de message IMG1. Cet identifiant IMG1 est un identifiant unique au niveau du dispositif NA, utilisé pour toutes les instances du message MG1 au sein de ce dispositif.

Lors d'une étape SA4, l'entité applicative E4 du dispositif NA construit un message de notification MS1. Ce message de notification MS1 contient un identifiant IDNA du dispositif NA, un identifiant E4 de l'entité applicative E4 du dispositif NA, un identifiant IFP de l'opération FP « Production_de_Message » mise en œuvre lors de l'étape SA0, l'identifiant IMG1 des instances du message MG1 et le message de données MG1.

Le message de notification MS1 peut également contenir une information temporelle, par exemple une date à laquelle l'opération FP a été mise en œuvre.

L'étape SA4 est suivie d'une étape SA6 lors de laquelle le message de notification MS1 est transmis par l'entité applicative E4 du dispositif NA au module de communication COM2 du dispositif NA. Le message de notification MS1 est par exemple généré et transmis simultanément à la mise en œuvre de l'opération FP.

Lors d'une étape SA8, le deuxième module de communication COM2 émet le message de notification MS1 à destination du dispositif DT1 de modélisation du réseau via la liaison de communication LC2.

Le message de notification MS1 signale la mise en œuvre de l'opération FP de type « Production_de_Message » par l'entité applicative E4. Il est transmis spontanément par le dispositif NA, via la liaison de communication LC2.

Le message de notification MS1 est reçu par le dispositif DT1 de modélisation du réseau lors d'une étape ST2.

Lors d'une étape SA10, l'entité applicative E4 du dispositif NA envoie le message de données MG1 et l'identifiant IMG1 à l'entité de routage E3 du dispositif NA.

Lors d'une étape SA12, suite à la réception du message de données MG1, l'entité de routage E3 du dispositif NA construit un deuxième message de données MG2 à partir du message de données MG1 reçu. L'étape SA12 consiste par exemple à ajouter un entête de routage au premier message de données MG1.

La prise en charge du message MG1 par l'entité de routage E3 pour construction du deuxième message de données MG2 représente une opération FN de type Notification_de_Message.

Lors d'une étape SA14, l'entité de routage E3 du dispositif NA construit un message de notification MS2. Le message de notification MS2 contient l'identifiant IDNA du dispositif NA, un identifiant E3 de l'entité de routage E3 du dispositif NA, un identifiant IFN de l'opération FN de type « Notification_de_Message » (en anglais FrameNotify), l'identifiant de message IMG1 des instances du message MG1 et le deuxième message de données MG2.

L'étape SA14 est suivie d'une étape SA16 lors de laquelle le message de notification MS2 est transmis par l'entité de routage E3 du dispositif NA au deuxième module de communication COM2 de ce dispositif.

Lors d'une étape SA18, le module de communication COM2 émet le message de notification MS2 à destination du dispositif DT1 de modélisation du réseau via la liaison de communication LC2.

Le message de notification MS2 signale la mise en œuvre de l'opération FN de type Notification_de_Message par l'entité de routage E3 du dispositif NA. Le message de notification MS2 est reçu par le dispositif de modélisation du réseau DT1 lors d'une étape ST4.

Lors d'une étape SA20, l'entité de routage E3 du dispositif NA envoie le deuxième message MG2 et l'identifiant IMG1 à l'entité de liaison E2 du dispositif NA.

Lors d'une étape SA22, suite à la réception du message de données MG2, l'entité de liaison E2 du dispositif NA construit un troisième message de données MG3 à partir du message de données MG2. L'étape SA22 consiste par exemple à rajouter des données, par exemple l'adresse MAC du dispositif NA aux données du message de données MG2.

La prise en charge du message de MG2 par l'entité de liaison E2 pour construction du message de données MG3 représente une opération FN de type « Notification_de_Message ».

Lors d'une étape SA24, l'entité de liaison E2 du dispositif NA construit un message de notification MS3. Le message de notification MS3 contient l'identifiant IDNA du dispositif NA, l'identifiant E2 de l'entité de liaison E2 du dispositif NA, l'identifiant IFN de l'opération FN de type « Notification_de_Message », l'identifiant IMG1 des instances du message MG1 et le message de données MG3.

L'étape SA24 est suivie d'une étape SA26 lors de laquelle le message de notification MS3 est transmis par l'entité de liaison E2 du dispositif NA au deuxième module de communication COM2 du dispositif NA.

Lors d'une étape SA28, le deuxième module de communication COM2 émet le message de notification MS3 à destination du dispositif DT1 de modélisation du réseau via la liaison de communication LC2.

Le message de notification MS2 signale la mise en œuvre de l'opération FN de type « Notification_de_Message » par l'entité de liaison E2 du dispositif NA. Le message de notification MS3 est reçu par le dispositif de modélisation du réseau DT1 lors d'une étape ST6.

Lors d'une étape SA30, l'entité de liaison E2 du dispositif NA envoie le message MG3 et l'identifiant IMG1 à l'entité de communication radio E1 du dispositif NA.

Lors d'une étape SA32, suite à la réception du message MG3, l'entité de communication radio E1 génère un signal à partir du message MG3 et transmet ce signal via la liaison de communication L1.

La transmission de ce signal sur le lien radio représente une opération FT de type « Transmission_de_Message » (en anglais FrameTransmit ».

Lors d'une étape SA34, l'entité de communication radio E1 construit un message de notification MS4. Ce message contient l'identifiant IDNA du dispositif NA, un identifiant E1 de l'entité de communication radio E1, un identifiant IFT de l'opération FT de type « Transmission_de_Message », l'identifiant IMG1 des instances du message MG1 et le message de données MG3.

L'étape SA34 est suivie d'une étape SA36 lors de laquelle le message de notification MS4 est transmis par l'entité de communication radio E1 du dispositif NA au deuxième module de communication COM2 du dispositif NA.

Lors d'une étape SA38, le deuxième module de communication COM2 émet le message de notification MS4 à destination du dispositif de modélisation du réseau DT1 via la liaison de communication LC2.

Le message de notification MS4 signale la mise en œuvre de l'opération FT de type « Transmission_de_Message » par l'entité de communication radio E1 du dispositif NA. Le message de notification MS4 est reçu par le dispositif de modélisation du réseau DT1 lors d'une étape ST8.

Pour résumer les messages de notification MS1 à MS4 comportent l'identifiant du nœud IDNA, un identifiant E4 à E1 de l'entité à l'origine d'une opération, un code de opération (FP pour « Production_de_Message », FN pour « Notification_de_Message » ou FT pour « Transmission_de_Message »), un identifiant IMG1 représentatif de toutes les instances MG1, MG2, MG3 du message MG1 au sein du nœud NA, et le message MG1, MG2 ou MG3 lui-même, chacun de ces instances de message comportant le contenu BC généré par l'entité applicative E4 à l'étape SA0.

Les étapes SA0 à SA38 et ST2 à ST8 sont réitérées pour la génération et l'envoi d'autres messages de données par le dispositif NA.

Le signal émis sur le lien radio L1 par l'entité de communication radio E1 du nœud NA est reçu par chacune des entités de communication radio E1 des nœuds NB et NC.

Au sein du nœud NB :
- l'entité de communication radio E1 reçoit le signal radio, obtient un message MG4 après démodulation, déclenche l'envoi au dispositif de modélisation du réseau DT1, par le deuxième module de communication COM2, d'un message de notification MS5 signalant une opération FR de type « Réception_de_Message » (en anglais FrameReceive). Dans l'exemple de réalisation décrit ici, ce message MG4 est une instance du message de données MG1;
- l'entité de communication radio E1 génère un identifiant IMG4 utilisé pour toutes les instances du message MG4 au sein du nœud NDB et transmet cet identifiant IMG4 et le message de données MG4 à l'entité de liaison E2. L'entité de liaison E2 désencapsule le message de données MG4 pour constituer une autre instance MG5 du message MG1, consomme le message MG5 et déclenche l'envoi, par les deuxièmes moyens de communication COM2, d'un message MS6 de notification signalant une opération FC de type « Consommation_de_Message » (en anglais FrameConsume).

Les messages de notification MS5, MS6 comportent l'identifiant IDNB du nœud NB, un identifiant E1, E2 de l'entité à l'origine de ce message de notification, un code opération (FR, FC), l'identifiant IMG4 des instances du message MG4 au sein du nœud NB et le message MG4, MG5 à proprement parler. Ce message MG4, MG5 est une instance du message MG1 ; il comporte le contenu BC générées par l'entité applicative E4 du nœud NDA à l'étape SA0.

Au sein du nœud NC :
- l'entité de communication radio E1 reçoit le signal radio émis par le nœud NA, obtient après démodulation un message MG6 constituant une instance MG6 du message de données MG1, déclenche l'envoi, par le module de communication COM2 d'un message de notification MS7 signalant une opération FR de type « Réception_de_Message » à destination du dispositif de modélisation du réseau DT1 ;
- l'entité de communication radio E1 génère un identifiant IMG6 pour les instances du message MG6 au sein du nœud NDC et transmet cet identifiant et le message de données MG6 à l'entité de liaison E2. L'entité de liaison E2 désencapsule le message de données MG6 pour constituer une autre instance MG7 du message MG6, transmet le message MG7 à l'entité de routage E3 et déclenche l'envoi par les moyens de communication COM2 d'un message MS8 de notification signalant une opération FN de type « Notification_de_Message » par l'entité E2 ;
- L'entité de routage E3 modifie le message de données MG7 pour constituer une autre instance MG8 du message MG6, transmet le message MG8 à l'entité de liaison E2 et déclenche, par les deuxièmes moyens de communication COM2, l'envoi d'un message MS9 de notification signalant une opération FN de type « Notification_de_Message » par l'entité de routage E3 ;
- L'entité de liaison E2 modifie le message de données MG8 pour constituer une autre instance MG9 du message MG6, transmet le message de données MG9 à l'entité de communication radio E1 et déclenche, par les deuxièmes moyens de communication COM2, l'envoi d'un message MS10 de notification signalant une opération FN de type « Notification_de_Message » par l'entité de liaison E2 ;

L'entité de routage E1 du dispositif NC génère un signal à partir du message MG9 et transmet ce signal via la liaison de communication L1. La transmission de ce signal sur le lien radio représente une opération FT de type « Transmission_de_Message ». L'entité de routage E1 du dispositif NB construit un message de notification MS11 signalant une opération FT de type « Transmission_de_Message », et déclenche l'envoi de ce message de notification MS11 par les deuxièmes moyens de communication COM2, à destination du dispositif de modélisation du réseau DT1.

Chacun des messages de données MG7 à MG10 constitue une instance du message de données MG1 et comporte notamment le contenu BC.

Les messages de notification MS7 à MS11 comportent l'identifiant IDNC du nœud NC, un identifiant E1, E2, E3 de l'entité à l'origine de ce message de notification, un code opération (FR, FN, FT), un identifiant commun à toutes les instances du message MG6 au sein du nœud NC et un instance MG7 à MG11, chacun de ces messages constituant une instance du message MG1 comportant le contenu BC générées par l'entité applicative E4 du nœud NDA à l'étape SA0.

Le signal émis sur le lien radio L1 par le nœud NC est reçu par chacune des entités de communication radio E1 des nœuds ND et NE.

Au sein du nœud ND :
- l'entité de communication radio E1 reçoit ce signal radio, obtient après démodulation un message MG10 correspondant à une instance du message MG1, déclenche l'envoi, par le deuxième module de communication COM2 d'un message de notification MS12 signalant une opération FR de type « Réception_de_Message » à destination du dispositif de modélisation du réseau DT1 ;
- l'entité de communication radio E1 génère un identifiant IMG10 pour les instances du message MG10 au sein du nœud ND et transmet cet identifiant et le message de données MG10 à l'entité de liaison E2. L'entité de liaison E2 désencapsule le message de données MG10 pour constituer une autre instance MG11 du message MG10, consomme le message MG11 et déclenche l'envoi d'un message MS13 de notification signalant une opération FC de type « Consommation_de_Message » par les deuxièmes moyens de communication COM2.

Les messages de notification MS12, MS13 comportent l'identifiant IDND du nœud ND, un identifiant E1, E2 de l'entité à l'origine de ce message de notification, un code opération FR, FC, un identifiant MG10 commun à toutes les instances du message MG10 au sein du nœud ND et un message MG10, MG11 constituant une instance du message MG1, ces messages comportant le contenu BC générées par l'entité applicative E4 du nœud NDA à l'étape SA0.

Au sein du nœud NE :
- l'entité de communication radio E1 reçoit le signal radio émis par le nœud NC, obtient un message MG12 après démodulation, ce message constituant une instance du message de données MG1, déclenche l'envoi, par le deuxième module de communication COM2 d'un message de notification MS14 signalant une opération FR de type Réception_de_Message au dispositif DT1 de modélisation du réseau ;
- l'entité de communication radio E1 transmet le message de données MG12 à l'entité de liaison E2. L'entité de liaison E2 désencapsule le message de données MG12 pour constituer une autre instance MG13 du message MG12, transmet l'identifiant IMG12 et le message de données MG12 à l'entité de routage E3 et déclenche, par les deuxièmes moyens de communication COM2, l'envoi d'un message MS15 de notification à destination du dispositif DT1 de modélisation du réseau signalant une opération FN de type « Notification_de_Message » par l'entité de liaison E2 ;
- l'entité de routage E3 désencapsule le message de données MG14 pour constituer une autre instance MG12, transmet le message MG14 et l'identifiant IMG12 à l'entité applicative E4 et déclenche, par les deuxièmes moyens de communication COM2, l'envoi d'un message MS16 de notification signalant une opération FN de type « Notification_de_Message » par l'entité de routage E3 ;
- l'entité applicative E4 désencapsule le message de données MG14 et le consomme. Elle déclenche, par les deuxièmes moyens de communication COM2, l'envoi d'un message MS17 de notification signalant une opération FC de type « Consommation_de_Message » par l'entité applicative E4.

Les messages de notification MS14 à MS17 comportent l'identifiant IDNE du nœud NE, un identifiant E1 à E4 de l'entité à l'origine de ce message de notification, un code opération FR, FN, FC, un identifiant IMG12 commun aux instances MG12 à MG14 du message MG1 au sein du nœud NE, et le message MG14 à MG17 ce message comportant le contenu BC générées par l'entité applicative E4 du nœud NDA à l'étape SA0.

Les messages de notification MS1 à MS17 sont reçus par le dispositif de modélisation du réseau.

Un mode de réalisation d'un procédé de modélisation du réseau va maintenant être décrit en référence à la figure 6.

Dans l'exemple de réalisation décrit ici, sur réception d'un message de notification (étape E200), le module de réception REC du dispositif DT1 de modélisation du réseau enregistre ce message dans sa mémoire de stockage BD. Les messages sont par exemple enregistrés en association avec une date de réception ajoutée par le dispositif DT1 de modélisation du réseau. A titre d'alternative, les messages reçus comportent une date.

Dans le mode de réalisation décrit ici, lorsque le message de notification reçu comporte un code d'opération FP représentatif de la génération d'un nouveau message de données (étape E202), le dispositif de modélisation du réseau :
- démarre (étape E204) un nouvel état NS du réseau correspondant à une période de temps suffisamment longue pour recevoir les messages de notification correspondant à toutes les instances de ce message ; et
- créée (étape E206) une nouvelle trajectoire TJ associée à cette première instance du message.

Les messages de notification MS1 à MS17 sont donc dans cet exemple tous classés par le dispositif de modélisation du réseau comme appartenant au même état NS du réseau.

Lorsque le message de notification MS2 à MS17 comporte un code d'opération autre que le code FP, le dispositif de modélisation du réseau :
- détermine (étape E212) à quelle trajectoire relier cette opération par comparaison des contenus. Les messages MG2 à MG14 comportent tous un contenu CB identique à celui du message MG1 de sorte que tous les messages MG1 à MG14 sont dans cet exemple rattachés à la même trajectoire TJ ; et
- met à jour (étape E214) la trajectoire TJ du message à travers les différentes entités des différents nœuds par mise en œuvre de l'heuristique de l'Annexe 1.

Conformément à cette heuristique, on se place dans un état NS du réseau, cet état du réseau correspondant à une période de temps suffisamment longue pour recevoir les messages de notification correspondant à toutes les instances d'un même message. Lorsque le dispositif NT1 de modélisation du réseau reçoit un message de notification au sujet d'un message de données, il cherche à faire correspondre ce message de données avec d'éventuelles instances de ce même message de données déjà déclarées en raison d'une autre opération. Il parcourt ensuite la trajectoire pour identifier les nœuds ayant déclaré une instance du même message de données au modèle.

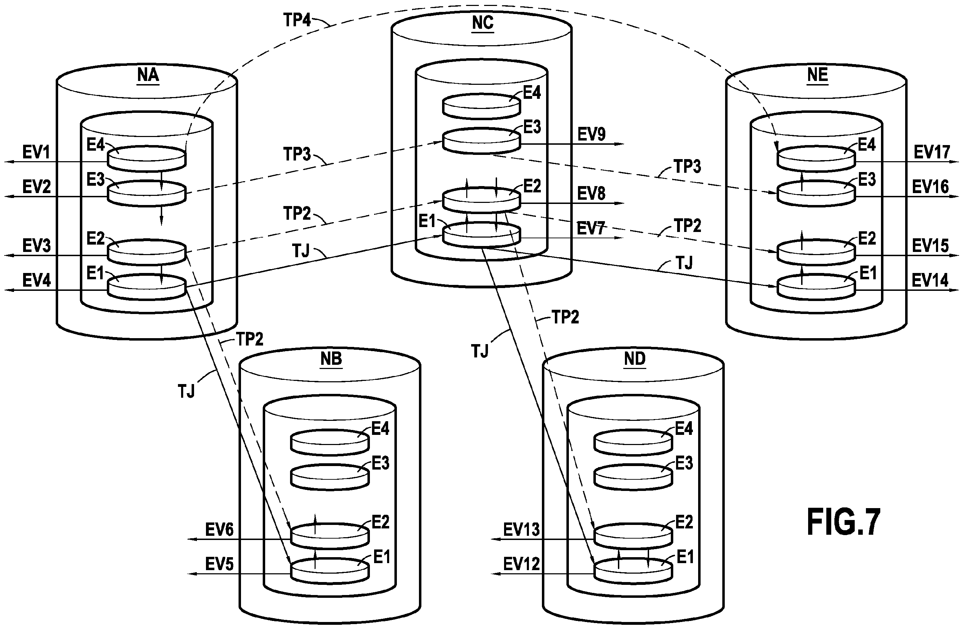

La figure 7 représente cette trajectoire TJ après réception de toutes les instances MG1 à MG14 du message MG1.

Au cours d'une étape E216, le dispositif DT1 de modélisation du réseau met à jour les topologies TP1 à TP4 en utilisant l'heuristique de l'Annexe 2, cette étape consistant à générer des liens entre les entités des nœuds NA à NE aux niveaux d'abstraction correspondant aux différentes entités fonctionnelles de ces nœuds.

La figure 7 représente également lesdites topologies après réception de toutes les instances MG1 à MG14 du message MG1.

Dans le mode de réalisation décrit, les opérations mises en œuvres et signalées par les dispositifs formant nœuds sont :
- la génération d'un message de données ;
- la prise en charge par une entité fonctionnelle d'un nœud, d'un message reçu en provenance d'une entité fonctionnelle du même nœud, la réception ou l'envoi d'un message de données par un nœud.
D'autres opérations peuvent être signalées.

Par ailleurs, dans l'exemple décrit ici, le message de données MG1 a été généré (étape SA0) par l'entité applicative E4 du nœud NA. L'invention s'applique de la même façon si un message est généré par une autre entité du nœud, par exemple une entité de routage.

Dans le mode de réalisation décrit, chaque entité fonctionnelle ne signale qu'une opération pour un message de données.

En variante, une entité fonctionnelle peut signaler plusieurs opérations pour un même message de données. Par exemple, elle peut signaler la prise en charge d'un message de données, son traitement puis l'envoi du message à une autre entité fonctionnelle.

Dans les exemples de réalisation décrits, chaque message de notification transmis à destination du dispositif DT1 de modélisation du réseau signale une seule opération.

A titre d'alternative, un message de notification peut signaler plusieurs opérations.

Dans le mode de réalisation décrit, chaque message de notification comporte un message de données associé. En variante, seuls, les messages signalant la réception ou l'émission de données via la liaison de communication L1 comportent un message de données associé.

Dans ce cas, les trajectoires au sein d'un nœud sont reconstituées en utilisant l'identifiant unique utilisé pour toutes les instances d'un même message au sein du nœud.
Dans le mode de réalisation décrit, les messages de notification sont reçus et analysés par un même équipement, le dispositif DT1 de modélisation du réseau.

A titre d'alternative, les messages de notification sont reçus et enregistrés par un premier équipement et analysés par un deuxième équipement. Dans ce cas, les messages de notification sont enregistrés par le premier équipement dans une mémoire accessible par le deuxième équipement, par exemple une zone mémoire spécifique d'un réseau de télécommunication.

### ANNEXE 1

```
 frameOtherCasesMatcher: (frameId, nodeId, NS) ->
   for id, packet of NS.packets
     for record in packet.trajectory by reversedOrder
       if not match? and record.nodeId == nodeId and record.frameId == frameId
          match = {'packet': packet, 'predecessor': null}
       if match? and (record.type == transmitFrame or record.type == produceFrame)
          match.predecessor = record.nodeId
          return match
```

### ANNEXE 2

```
 linkAddition: (eventId, date, frameId, frame, nodeId, entityId, NS) ->
     match = frameOtherCasesMatcher(frameId, entityId, NS)
     if match?
        createPacketRecord(match.packet.id, date, nodeId, entityId, frameId, frame, eventId)
     if match.predecessor? and match.predecessor != nodeId
        link = createLink(match.predecessor, entityId, nodeId)
```

## Revendications

1. Procédé de notification mis en œuvre par au moins un premier dispositif (NA) d'une pluralité de dispositifs (NA, NB, NC) formant nœuds d'un réseau (R), ledit premier dispositif (NA) étant apte à émettre à destination d'au moins un deuxième dispositif de la pluralité et/ou à recevoir d'au moins un deuxième dispositif de la pluralité, au moins un message de données via une première liaison de communication (L1),
ce procédé comportant une étape de transmission, par ledit premier dispositif, d'au moins un message de notification signalant au moins une opération prédéterminée relative à au moins une instance dudit message de données et mise en œuvre par une entité fonctionnelle dudit premier dispositif, ledit message de notification comportant un identifiant dudit premier dispositif, un identifiant de ladite entité fonctionnelle, un identifiant de ladite opération et un identifiant commun à toutes les instances dudit message de données au sein dudit premier dispositif.

2. Procédé de notification selon la revendication 1 dans lequel ledit premier dispositif émet un dit message de notification à chaque occurrence de l'une des opérations suivantes :
- génération d'un message de données par une entité dudit dispositif ;
- prise en charge par une entité fonctionnelle dudit dispositif d'un message reçu en provenance d'une entité autre fonctionnelle dudit dispositif ;
- envoi d'un message de données en provenance d'un autre dispositif ;
- envoi d'un message de données à un autre dispositif ;
- consommation d'un message de données par une entité fonctionnelle dudit dispositif.

3. Procédé de notification selon la revendication 1 ou 2 dans lequel ledit identifiant de message est généré par ledit premier dispositif lors de la réception par ledit premier dispositif d'un message de données via la première liaison de communication ou lors de la génération d'un message de données par le premier dispositif.

4. Procédé de notification selon l'une des revendications 1 à 3 dans lequel ledit message de notification comporte ledit message de données.

5. Procédé de notification selon l'une des revendications précédentes dans lequel ledit message de notification comprend une date.

6. Procédé de notification selon l'une des revendications précédentes dans lequel ledit au moins un message de notification est transmis via une deuxième liaison de communication.

7. Procédé de modélisation d'un réseau à partir de messages de notification émis par au moins un premier dispositif (NA) d'une pluralité de dispositifs (NA, NB, NC, ND, NE) formant nœuds dudit réseau (R), ledit premier dispositif étant apte à émettre à destination d'au moins un deuxième dispositif de la pluralité et/ou à recevoir d'au moins un deuxième dispositif de la pluralité, au moins un message de données via une première liaison de communication (L1),
ledit procédé comportant les étapes suivantes mises en œuvre par un dispositif (DT1) de modélisation du réseau :
- obtention d'une pluralité de messages de notification émis par au moins un dispositif de la pluralité de dispositifs, un dit message de notification signalant au moins une opération prédéterminée relative à au moins une instance d'un message de données et mise en œuvre par une entité fonctionnelle dudit au moins un dispositif, ledit message de notification comportant un identifiant dudit dispositif, un identifiant de ladite entité fonctionnelle, un identifiant de ladite opération et un identifiant commun à toutes les instances dudit message de données au sein dudit dispositif;
- détermination d'au moins une partie d'un trajet effectué par au moins un dit message de données au sein dudit réseau par analyse de messages de notification reçus ; et
- pour au moins une entité fonctionnelle, détermination d'une topologie du réseau au niveau d'abstraction d'au moins une dite entité fonctionnelle, par analyse de messages de notification reçus.

8. Procédé de modélisation du réseau selon la revendication 7 dans lequel au moins certains desdits messages de notification reçus comprennent un dit message de données et dans lequel ledit trajet comporte au moins une première partie de trajet au sein d'un dispositif de la pluralité de dispositifs et une deuxième partie de trajet entre un premier dispositif de ladite pluralité et un deuxième dispositif de ladite pluralité, ladite première partie de trajet étant déterminée en fonction desdits identifiants communs aux instances d'un même message de données au sein d'un dispositif et la dite deuxième partie étant déterminée par comparaison de messages de données contenus dans lesdits messages de notification.

9. Procédé de modélisation du réseau selon la revendication 7 ou 8 dans lequel au moins certains desdits messages de notification reçus comprennent un dit message de données et dans lequel ladite topologie, à un niveau d'abstraction donné est obtenue à partir des identifiants d'entités fonctionnelles compris dans lesdits messages de notification.

10. Dispositif formant nœud (NA) d'un réseau (R) d'une pluralité de dispositifs formant nœuds (NA, NB, NC) dudit réseau, ledit dispositif (NA) étant apte à émettre à destination d'au moins un deuxième dispositif de la pluralité et/ou à recevoir d'au moins un deuxième dispositif de la pluralité, au moins un message de données via une première liaison de communication (L1),
ledit dispositif comportant un module de communication (COM2), adapté pour transmettre un message de notification signalant au moins une opération prédéterminée relative à au moins une instance dudit message de données et mise en œuvre par une entité fonctionnelle dudit dispositif, ledit message de notification comportant un identifiant dudit dispositif, un identifiant de ladite entité fonctionnelle, un identifiant de ladite opération et un identifiant commun à toutes les instances dudit message au sein dudit dispositif.

11. Dispositif de modélisation d'un réseau (DT1) comportant:
- un module d'obtention d'une pluralité de messages de notification en provenance d'au moins un dispositif formant nœud d'un réseau (R) d'une pluralité de dispositifs (NA, NB, NC) formant nœuds dudit réseau, ledit dispositif étant apte à émettre à destination d'au moins un deuxième dispositif de la pluralité et/ou à recevoir d'au moins un deuxième dispositif de la pluralité, au moins un message de données via une première liaison de communication (L1),
un dit message de notification signalant au moins une opération prédéterminée relative à au moins une instance dudit message de données et mise en œuvre par une entité fonctionnelle dudit dispositif formant nœud, ledit message de notification comportant un identifiant dudit dispositif, un identifiant de ladite entité fonctionnelle, un identifiant de ladite opération et un identifiant commun à toutes les instances dudit message au sein dudit dispositif; et
- un module de traitement adapté pour analyser au moins certains des messages de notification reçus en vue de reconstituer au moins une partie d'un trajet effectué par au moins un dit message de données au sein dudit réseau et pour déterminer une topologie du réseau au niveau d'abstraction d'une dite entité fonctionnelle.

## Patentansprüche

1. Benachrichtigungsverfahren, das von mindestens einer ersten Vorrichtung (NA) einer Vielzahl von Knoten eines Netzwerks (R) bildenden Vorrichtungen (NA, NB, NC) durchgeführt wird, wobei die erste Vorrichtung (NA) über eine erste Kommunikationsverbindung (L1) mindestens eine Datennachricht an mindestens eine zweite Vorrichtung der Vielzahl senden und/oder von mindestens einer zweiten Vorrichtung der Vielzahl empfangen kann,
wobei dieses Verfahren einen Schritt der Übertragung mindestens einer Benachrichtigungsnachricht durch die erste Vorrichtung aufweist, die mindestens einen vorbestimmten Vorgang anzeigt, der sich auf mindestens eine Instanz der Datennachricht bezieht und von einer Funktionsentität der ersten Vorrichtung durchgeführt wird, wobei die Benachrichtigungsnachricht eine Kennung der ersten Vorrichtung, eine Kennung der Funktionsentität, eine Kennung des Vorgangs und eine allen Instanzen der Datennachricht gemeinsame Kennung innerhalb der ersten Vorrichtung aufweist.

2. Benachrichtigungsverfahren nach Anspruch 1, wobei die erste Vorrichtung eine Benachrichtigungsnachricht bei jedem Auftreten eines der folgenden Vorgänge sendet:
- Generierung einer Datennachricht durch eine Entität der Vorrichtung;
- Übernahme durch eine Funktionsentität der Vorrichtung einer von einer anderen Funktionsentität der Vorrichtung kommend empfangenen Nachricht;
- bekommen einer von einer anderen Vorrichtung kommenden Datennachricht;
- Senden einer Datennachricht an eine andere Vorrichtung;
- Verbrauch einer Datennachricht durch eine Funktionsentität der Vorrichtung.

3. Benachrichtigungsverfahren nach Anspruch 1 oder 2, wobei die Nachrichtenkennung von der ersten Vorrichtung bei Empfang durch die erste Vorrichtung einer Datennachricht über die erste Kommunikationsverbindung oder bei der Generierung einer Datennachricht durch die erste Vorrichtung generiert wird.

4. Benachrichtigungsverfahren nach einem der Ansprüche 1 bis 3, wobei die Benachrichtigungsnachricht die Datennachricht aufweist.

5. Benachrichtigungsverfahren nach einem der vorhergehenden Ansprüche, wobei die Benachrichtigungsnachricht ein Datum enthält.

6. Benachrichtigungsverfahren nach einem der vorhergehenden Ansprüche, wobei die mindestens eine Benachrichtigungsnachricht über eine zweite Kommunikationsverbindung übertragen wird.

7. Verfahren zur Modellierung eines Netzwerks ausgehend von Benachrichtigungsnachrichten, die von mindestens einer ersten Vorrichtung (NA) einer Vielzahl von Knoten des Netzwerks (R) formenden Vorrichtungen (NA, NB, NC, ND, NE) gesendet werden, wobei die erste Vorrichtung mindestens eine Datennachricht über eine erste Kommunikationsverbindung (L1) an mindestens eine zweite Vorrichtung der Vielzahl senden und/oder von mindestens einer zweiten Vorrichtung der Vielzahl empfangen kann,
wobei das Verfahren die folgenden Schritte aufweist, die von einer Modellierungsvorrichtung (DT1) des Netzwerks durchgeführt werden:
- Erhalt einer Vielzahl von Benachrichtigungsnachrichten, die von mindestens einer Vorrichtung der Vielzahl von Vorrichtungen gesendet werden, wobei eine Benachrichtigungsnachricht mindestens einen vorbestimmten Vorgang anzeigt, der sich auf mindestens eine Instanz einer Datennachricht bezieht und von einer Funktionsentität der mindestens einen Vorrichtung durchgeführt wird, wobei die Benachrichtigungsnachricht eine Kennung der Vorrichtung, eine Kennung der Funktionsentität, eine Kennung des Vorgangs und eine allen Instanzen der Datennachricht gemeinsame Kennung innerhalb der Vorrichtung aufweist;
- Bestimmung mindestens eines Teils eines von mindestens einer Datennachricht innerhalb des Netzwerks ausgeführten Wegs durch Analyse empfangener Benachrichtigungsnachrichten; und
- für mindestens eine Funktionsentität, Bestimmung einer Topologie des Netzwerks auf der Abstraktionsstufe mindestens einer Funktionsentität durch Analyse empfangener Benachrichtigungsnachrichten.

8. Modellierungsverfahren des Netzwerks nach Anspruch 7, wobei mindestens bestimmte der empfangenen Benachrichtigungsnachrichten eine Datennachricht enthalten, und wobei der Weg mindestens einen ersten Wegteil innerhalb einer Vorrichtung der Vielzahl von Vorrichtungen und einen zweiten Wegteil zwischen einer ersten Vorrichtung der Vielzahl und einer zweiten Vorrichtung der Vielzahl aufweist, wobei der erste Wegteil abhängig von den den Instanzen einer gleichen Datennachricht gemeinsamen Kennungen innerhalb einer Vorrichtung bestimmt wird, und der zweite Teil durch Vergleich von in den Benachrichtigungsnachrichten enthaltenen Datennachrichten bestimmt wird.

9. Modellierungsverfahren des Netzwerks nach Anspruch 7 oder 8, wobei mindestens bestimmte der empfangenen Benachrichtigungsnachrichten eine Datennachricht enthalten, und wobei die Topologie, auf einer gegebenen Abstraktionsstufe, ausgehend von den Kennungen von Funktionsentitäten erhalten wird, die in den Benachrichtigungsnachrichten enthalten sind.

10. Knotenbildende Vorrichtung (NA) eines Netzwerks (R) einer Vielzahl von Knoten des Netzwerks bildenden Vorrichtungen (NA, NB, NC), wobei die Vorrichtung (NA) mindestens eine Datennachricht über eine erste Kommunikationsverbindung (L1) an mindestens eine zweite Vorrichtung der Vielzahl senden und/oder von mindestens einer zweiten Vorrichtung der Vielzahl empfangen kann, wobei die Vorrichtung ein Kommunikationsmodul (COM2) aufweist, das geeignet ist, eine Benachrichtigungsnachricht zu übertragen, die mindestens einen vorbestimmten Vorgang anzeigt, der sich auf mindestens eine Instanz der Datennachricht bezieht und von einer Funktionsentität der Vorrichtung durchgeführt wird, wobei die Benachrichtigungsnachricht eine Kennung der Vorrichtung, eine Kennung der Funktionsentität, eine Kennung des Vorgangs und eine allen Instanzen der Nachricht gemeinsame Kennung innerhalb der Vorrichtung aufweist.

11. Modellierungsvorrichtung eines Netzwerks (DT1), die aufweist:
- ein Modul zum Erhalt einer Vielzahl von Benachrichtigungsnachrichten von mindestens einer knotenbildenden Vorrichtung eines Netzwerks (R) einer Vielzahl von Knoten des Netzwerks bildenden Vorrichtungen (NA, NB, NC) kommend, wobei die Vorrichtung mindestens eine Datennachricht über eine erste Kommunikationsverbindung (L1) an mindestens eine zweite Vorrichtung der Vielzahl senden und/oder von mindestens einer zweiten Vorrichtung der Vielzahl empfangen kann,
- wobei eine Benachrichtigungsnachricht mindestens einen vorbestimmten Vorgang anzeigt, der sich auf mindestens eine Datennachricht bezieht und von einer Funktionsentität der knotenbildenden Vorrichtung durchgeführt wird, wobei die Benachrichtigungsnachricht eine Kennung der Vorrichtung, eine Kennung der Funktionsentität, eine Kennung des Vorgangs und eine allen Instanzen der Nachricht gemeinsame Kennung innerhalb der Vorrichtung aufweist; und
- ein Verarbeitungsmodul, das geeignet ist, mindestens bestimmte der empfangenen Benachrichtigungsnachrichten zu analysieren, um mindestens einen Teil eines von mindestens einer Datennachricht innerhalb des Netzwerks ausgeführten Wegs wiederherzustellen und um eine Topologie des Netzwerks auf der Abstraktionsstufe einer Funktionsentität zu bestimmen.

## Claims

1. Notification method implemented by at least one first device (NA) of a plurality of devices (NA, NB, NC) that form nodes of a network (R), said first device (NA) being able to send to at least one second device of the plurality, and/or to receive from at least one second device of the plurality, at least one data message via a first communication link (L1),
this method including a step of transmission, by said first device, of at least one notification message signalling at least one predetermined operation that relates to at least one instance of said data message and is implemented by a functional entity of said first device, said notification message including an identifier of said first device, an identifier of said functional entity, an identifier of said operation and an identifier common to all the instances of said data message within said first device.

2. Notification method according to Claim 1, wherein said first device sends one said notification message on every occurrence of one of the following operations:
- generation of a data message by an entity of said device;
- handling, by a functional entity of said device, of a message received from another functional entity of said device;
- reception of a data message from another device;
- sending of a data message to another device;
- consumption of a data message by a functional entity of said device.

3. Notification method according to Claim 1 or 2, wherein said message identifier is generated by said first device when said first device receives a data message via the first communication link or when a data message is generated by the first device.

4. Notification method according to one of Claims 1 to 3, wherein said notification message includes said data message.

5. Notification method according to one of the preceding claims, wherein said notification message comprises a date.

6. Notification method according to one of the preceding claims, wherein said at least one notification message is transmitted via a second communication link.

7. Method for modelling a network on the basis of notification messages sent by at least one first device (NA) of a plurality of devices (NA, NB, NC, ND, NE) that form nodes of said network (R), said first device being able to send to at least one second device of the plurality, and/or to receive from at least one second device of the plurality, at least one data message via a first communication link (L1),
said method including the following steps implemented by a device (DT1) for modelling the network:
- obtaining a plurality of notification messages sent by at least one device of the plurality of devices, one said notification message signalling at least one predetermined operation that relates to at least one instance of a data message and is implemented by a functional entity of said at least one device, said notification message including an identifier of said device, an identifier of said functional entity, an identifier of said operation and an identifier common to all the instances of said data message within said device;
- determining at least one portion of a path taken by at least one said data message within said network by analysing received notification messages; and
- for at least one functional entity, determining a topology of the network at the level of abstraction of at least one said functional entity by analysing received notification messages.

8. Method for modelling the network according to Claim 7, wherein at least some of said received notification messages comprise one said data message and wherein said path includes at least one first path portion within a device of the plurality of devices and one second path portion between a first device of said plurality and a second device of said plurality, said first path portion being determined on the basis of said identifiers common to the instances of a single data message within a device, and said second portion being determined by comparing data messages contained in said notification messages.

9. Method for modelling the network according to Claim 7 or 8, wherein at least some of said received notification messages comprise one said data message and wherein said topology at a given level of abstraction is obtained from the identifiers of functional entities comprised in said notification messages.

10. Device that forms a node (NA) of a network (R) of a plurality of devices that form nodes (NA, NB, NC) of said network, said device (NA) being able to send to at least one second device of the plurality, and/or to receive from at least one second device of the plurality, at least one data message via a first communication link (L1),
said device including a communication module (COM2), which is designed to transmit a notification message signalling at least one predetermined operation that relates to at least one instance of said data message and is implemented by a functional entity of said device, said notification message including an identifier of said device, an identifier of said functional entity, an identifier of said operation and an identifier common to all the instances of said message within said device.

11. Device for modelling a network (DT1) including:
- a module for obtaining a plurality of notification messages from at least one device that forms a node of a network (R) of a plurality of devices (NA, NB, NC) that form nodes of said network, said device being able to send to at least one second device of the plurality, and/or to receive from at least one second device of the plurality, at least one data message via a first communication link (L1),
one said notification message signalling at least one predetermined operation that relates to at least one instance of said data message and is implemented by a functional entity of said device that forms a node, said notification message including an identifier of said device, an identifier of said functional entity, an identifier of said operation and an identifier common to all the instances of said message within said device; and
- a processing module designed to analyse at least some of the received notification messages with a view to reconstructing at least one portion of a path taken by at least one said data message within said network and to determine a topology of the network at the level of abstraction of one said functional entity.
